# EUROPÄISCHE PATENTANMELDUNG

(11) **EP 3 425 195 A1**
(43) Veröffentlichungstag der Anmeldung: **09.01.2019**
(21) Anmeldenummer: 17179805.1
(22) Anmeldetag: 05.07.2017
(51) Int. Cl.: F03D 1/06

(54) **TEILBARES WINDENERGIEANLAGENROTORBLATT MIT EINER BUCHSENBAUGRUPPE**

(71) Anmelder: Nordex Energy GmbH, 22419 Hamburg (DE)
(72) Erfinder: Rauter, Natalie, 21031 Hamburg (DE); Nickel, Andreas, 22765 Hamburg (DE)
(74) Vertreter: Hauck Patentanwaltspartnerschaft mbB

(57) **Zusammenfassung**

Windenergieanlagenrotorblatt, das in Längsabschnitte teilbar ist, wobei zwei Längsabschnitte jeweils ein in Längsrichtung des Windenergieanlagenrotorblatts verlaufendes Holmelement aus einem faserverstärkten Kunststoffmaterial aufweisen, wobei in einander überlappenden Abschnitten der beiden Holmelemente jeweils eine Öffnung ausgebildet ist, in der jeweils eine Gleitbuchse angeordnet ist, wobei die beiden Gleitbuchsen mit einem durch die beiden Gleitbuchsen hindurchgeführten Bolzen miteinander verspannt sind und wobei eine Buchsenbaugruppe zwischen einer der Gleitbuchsen und der diese Gleitbuchse umgebenden Öffnung angeordnet ist, um in Radialrichtung wirkende Kräfte zwischen diesen Elementen zu übertragen, wobei an dem Abschnitt des Holmelements, in dessen Öffnung die Buchsenbaugruppe angeordnet ist, eine Metallplatte befestigt ist, und dass die Buchsenbaugruppe in Axialrichtung mit der Metallplatte verspannt ist.

## Beschreibung

Die Erfindung betrifft ein in Längsabschnitte teilbares Windenergieanlagenrotorblatt. Die Möglichkeit, Windenergieanlagenrotorblätter in Längsabschnitte zu teilen, gewinnt mit den immer größer werdenden Abmessungen der Windenergieanlagenrotorblätter an Bedeutung. Ein zentraler Vorteil ist die Vereinfachung des Transports vom Ort der Fertigung zum Errichtungsort der Windenergieanlage. Die Verbindung der Längsabschnitte miteinander muss dauerhaft höchste Festigkeitsanforderungen erfüllen. Gleichzeitig soll die Verbindung mit möglichst einfachen Mitteln auf der Baustelle möglich sein.

Es sind ganz unterschiedliche Lösungsansätze für die Verbindung der Längsabschnitte vorgeschlagen worden, beispielsweise ein Verkleben der Längsabschnitte miteinander oder ein Verspannen mit Hilfe von Seilen. Ebenfalls bekannt ist eine Verbindung der Längsabschnitte mittels Bolzen.

Beispielsweise schlägt die Druckschrift EP 2 252 790 B1 vor, einen Verbindungsabschnitt eines Holms des blattspitzenseitigen Längsabschnitts in einen Holmkasten des blattwurzelseitigen Längsabschnitts einzusetzen und die überlappend angeordneten Abschnitte der Holme mit konischen Bolzen zu verbinden. Öffnungen in den Laminaten der Abschnitte werden hierzu in spezielle Buchsen aus Metall eingefasst, die konische Bohrungen aufweisen, in die die Bolzen eingesetzt werden.

Aus der Druckschrift DE 10 2014 118 004 B3 ist ein geteiltes Windenergieanlagenrotorblatt bekannt geworden, bei dem ebenfalls ein hervorstehender Abschnitt eines Holms eines blattspitzenseitigen Längsabschnitts in einen Holmkasten des blattwurzelseitigen Längsabschnitts eingesetzt wird. Bei dieser Lösung werden Bolzen durch Öffnungen in einander überlappenden Stegabschnitten hindurchgeführt. Um Toleranzen ausgleichen zu können, liegen die Stegabschnitte nicht unmittelbar aneinander an. Stattdessen werden Gleitbuchsen in die Öffnungen eingesetzt und die Bolzen werden durch die Gleitbuchsen hindurchgeführt. Dann werden zunächst die Gleitbuchsen mit dem Bolzen miteinander verspannt. Anschließend werden die Gleitbuchsen in den Öffnungen der Stegabschnitte mit Hilfe von Buchsenbaugruppen festgesetzt. In einem Ausführungsbeispiel weisen die Buchsenbaugruppen jeweils eine Spannbuchse auf, in anderen Ausführungsbeispielen eine Flanschbuchse, die in die Öffnung des Stegabschnitts eingeklebt wird.

Davon ausgehend ist es die Aufgabe der Erfindung, ein in Längsabschnitte teilbares Windenergieanlagenrotorblatt mit einander überlappenden, mit einem Bolzen miteinander verbundenen Abschnitten von Holmelementen zur Verfügung zu stellen, bei dem eine festere und dauerhaftere Verbindung erzielt wird.

Diese Aufgabe wird gelöst durch das Windenergieanlagenrotorblatt mit den Merkmalen des Anspruchs 1. Vorteilhafte Ausgestaltungen sind in den Unteransprüchen angegeben.

Das Windenergieanlagenrotorblatt ist in Längsabschnitte teilbar, wobei zwei Längsabschnitte jeweils ein in Längsrichtung des Windenergieanlagenrotorblatts verlaufendes Holmelement aus einem faserverstärkten Kunststoffmaterial aufweisen. In einander überlappenden Abschnitten der beiden Holmelemente ist jeweils eine Öffnung ausgebildet, in der jeweils eine Gleitbuchse angeordnet ist, wobei die beiden Gleitbuchsen mit einem durch die beiden Gleitbuchsen hindurchgeführten Bolzen miteinander verspannt sind. Zwischen einer der Gleitbuchsen und der diese Gleitbuchse umgebenden Öffnung ist eine Buchsenbaugruppe angeordnet, um in Radialrichtung wirkende Kräfte zwischen der Gleitbuchse und der Öffnung zu übertragen. An dem Abschnitt des Holmelements, in dessen Öffnung die Buchsenbaugruppe angeordnet ist, ist eine Metallplatte befestigt. Die Buchsenbaugruppe ist in Axialrichtung mit der Metallplatte verspannt.

Das Windenergieanlagenrotorblatt kann in zwei oder mehr Längsabschnitte unterteilt sein. Die Holmelemente bestehen aus einem faserverstärkten Kunststoffmaterial und bilden eine zentrale Tragstruktur der jeweiligen Längsabschnitte bzw., wenn sie miteinander verbunden sind, des gesamten Windenergieanlagenrotorblatts. Die zu verbindenden Abschnitte der Holmelemente weisen Öffnungen auf, die zylindrisch, insbesondere kreiszylindrisch sein können. Die überlappende Anordnung der Abschnitte der beiden Holmelemente kann insbesondere dadurch erreicht werden, dass eines der Holmelemente aus einer Teilungsebene, in der aerodynamische Hüllen der beiden Längsabschnitte aneinander grenzen, hervorsteht. Dieser hervorstehende Abschnitt des Holmelements des einen Längsabschnitts kann in eine korrespondierende Öffnung des anderen Längsabschnitts bzw. des Holmelements des anderen Längsabschnitts eingesetzt werden. Bevorzugt weist derjenige Längsabschnitt das hervorstehende Holmelement auf, der näher an der Blattspitze angeordnet ist.

Die beiden Holmelemente können jeweils zwei Stege aufweisen, wobei die beiden Stege des einen Holmelements zwischen den beiden Stegen des anderen Holmelements angeordnet sind und der mindestens eine Bolzen durch Öffnungen in allen vier Stegen hindurchgeführt ist. Die jeweils zwei Stege jedes Holmelements können mit zwei Gurten des jeweiligen Holmelements einen Holmkasten bilden. Die Gurte können in zwei Halbschalen des betreffenden Längsabschnitts des Rotorblatts integriert oder damit verbunden sein. Insbesondere können die beiden Stege des einen Holmelements zu einem blattspitzenseitigen Längsabschnitt gehören, in dem der Holmkasten kleinere Abmessungen aufweist, als in dem anderen Längsabschnitt. In diesem Fall ist das Einsetzen der Stege des einen Holmelements zwischen den beiden Stegen des anderen Holmelements besonders vorteilhaft.

Die in den Öffnungen angeordneten Gleitbuchsen sind mit einem durch die Gleitbuchsen hindurchgeführten Bolzen miteinander in Axialrichtung verspannt. Dadurch kann bei der Montage zunächst durch Anziehen des Bolzens bzw. einer auf den Bolzen aufgeschraubten Mutter eine Vorspannung auf die Gleitbuchsen aufgebracht werden, während die relative Anordnung der Gleitbuchsen zu den Öffnungen in den überlappenden Abschnitten der Holmelemente insbesondere in Axialrichtung noch variabel ist. Die Verbindung zwischen den Holmelementen und den Gleitbuchsen wird bei mindestens einer Öffnung durch die Buchsenbaugruppe hergestellt. Die Buchsenbaugruppe ist in die Öffnung eingesetzt und umgibt die Gleitbuchse ringförmig, so dass sie die in Radialrichtung wirkenden Kräfte übertragen kann. Natürlich können auch in mehrere oder sämtliche Öffnungen Buchsenbaugruppen eingesetzt sein, so dass die Verbindungen zwischen mehreren oder allen Gleitbuchsen und den diese aufnehmenden Holmelementen durch jeweils eine Buchsenbaugruppe erfolgen.

Bei der Erfindung erfolgt zusätzlich eine Festlegung der Buchsenbaugruppe relativ zu der Öffnung in Axialrichtung, und zwar durch Verspannen der Buchsenbaugruppe in Axialrichtung mit einer Metallplatte, die an dem Abschnitt des Holmelements befestigt ist. Die Metallplatte kann insbesondere eine kreisförmige oder ovale Grundform aufweisen. Sie kann an einer Außenfläche des Abschnitts des Holmelements angeordnet sein. Die Befestigung an dem Abschnitt kann zum Beispiel durch Verkleben der Metallplatte mit dieser Außenfläche erfolgen. Alternativ oder zusätzlich kann die Metallplatte mit dem Abschnitt verschraubt sein, zum Beispiel durch eine oder mehrere Schrauben, die durch Durchgangsbohrungen in dem Abschnitt hindurchgeführt und in Gewindebohrungen in der Metallplatte eingeschraubt sind. Die Metallplatte weist eine Öffnung für die Gleitbuchse auf, insbesondere in ihrer Mitte. Die Öffnung in der Metallplatte und die Öffnung in dem Abschnitt sind konzentrisch angeordnet. Die Öffnung in dem Abschnitt weist einen größeren Durchmesser auf als die Öffnung in der Metallplatte. Zwischen den beiden Öffnungen ist somit eine Stufe ausgebildet, an der die Buchsenbaugruppe anliegen kann.

Durch diese besondere Fixierung der Buchsenbaugruppe in axialer Richtung kann das Verhalten der Verbindung der beiden Holmelemente unter Dauerbelastung verbessert werden. Insbesondere kommt es auch unter wechselnden Beanspruchungen nicht oder nicht so leicht zu einer Beschädigung der Öffnung in dem faserverstärkten Kunststoffmaterial des Abschnitts des Holmelements. Die Erfinder führen dies darauf zurück, dass einerseits die Position der Buchsenbaugruppe bei der Montage exakt eingehalten wird, so dass der von der Buchsenbaugruppe auf die Mantelfläche der Öffnung in dem Abschnitt ausgeübte Lochleibungsdruck exakt den dafür vorgesehenen Längsabschnitt der Öffnung erfasst, insbesondere die gesamte Länge der Öffnung. Diese ideale Position der Buchsenbaugruppe wird auch nach der Montage dauerhaft beibehalten. Andererseits sorgt das Verspannen der Buchsenbaugruppe mit der Metallplatte dafür, dass Verformungen der Buchsenbaugruppe unter Belastung minimiert werden, was die Beanspruchung der Öffnung in dem Abschnitt des Holmelements ebenfalls reduziert.

In einer Ausgestaltung weist die Gleitbuchse, an der die Buchsenbaugruppe angeordnet ist, ein Außengewinde auf, auf das eine Mutter aufgeschraubt ist, wobei die Buchsenbaugruppe zwischen der Mutter und der Metallplatte angeordnet ist und mit der Mutter in Axialrichtung verspannt ist. Die Mutter kann insbesondere eine Nutmutter sein. Durch das Aufschrauben einer Mutter auf die Gleitbuchse wird die relative Anordnung von Gleitbuchse und Buchsenbaugruppe bzw. Buchsenbaugruppe einschließlich damit verspannter Metallplatte in Axialrichtung begrenzt. Dies kann die Montage vereinfachen. Zudem kann durch die sichere Fixierung der relativen Anordnung der genannten Elemente zueinander die Dauerbelastbarkeit der Verbindung verbessert werden.

In einer Ausgestaltung weist die Buchsenbaugruppe eine Vielzahl von Durchgangsbohrungen in Axialrichtung auf, durch die jeweils ein Sicherungsbolzen hindurchgeführt ist, der die Buchsenbaugruppe in Axialrichtung mit der Mutter und mit der Metallplatte verspannt. Die Sicherungsbolzen übernehmen also sowohl die Verspannung der Buchsenbaugruppe mit der Metallplatte als auch eine Verspannung der Buchsenbaugruppe mit der Mutter. Mutter, Buchsenbaugruppe und Metallplatte bilden dadurch eine fest verbundene Einheit, deren relative Position zur Gleitbuchse durch die Gewindeverbindung zwischen Mutter und Gleitbuchse in Axialrichtung festgelegt ist. Auch durch diese Maßnahme wird die Dauerbelastbarkeit der Verbindung zwischen Gleitbuchse und Holmelement verbessert.

In einer Ausgestaltung weist die Metallplatte Gewindebohrungen auf, in die die Sicherungsbolzen eingeschraubt sind. Auf diese Weise wird eine einfache und sichere Verbindung und Verspannung von Buchsenbaugruppe und Metallplatte erzielt.

In einer Ausgestaltung weist die Mutter Durchgangsöffnungen auf, durch die die Sicherungsbolzen hindurchgeführt sind. Dadurch können die Sicherungsbolzen besonders einfach an der Mutter festgelegt werden, beispielsweise durch Köpfe, die an der der Buchsenbaugruppe gegenüber liegenden Seite der Mutter anliegen. In diesem Fall können die Sicherungsbolzen einfach nach dem Aufschrauben der Mutter durch die Durchgangsöffnungen der Mutter und durch die Durchgangsöffnungen der Buchsenbaugruppe hindurch in Gewindebohrungen in der Metallplatte eingeschraubt werden.

In einer Ausgestaltung sind die Durchgangsbohrungen der Mutter kreisbogenförmige Langlöcher. Form und Größe der kreisbogenförmigen Langlöcher können auf einen von den Durchgangsbohrungen in der Buchsenbaugruppe gebildeten Lochkreis abgestimmt sein, sodass in jeder Drehstellung der Mutter durch jedes der Langlöcher eine Durchgangsbohrung der Buchsenbaugruppe zugänglich ist. Dies ermöglicht, die Mutter so weit wie gewünscht auf die Gleitbuchse aufzuschrauben und nachfolgend die Sicherungsbolzen durch die kreisbogenförmigen Langlöcher einzusetzen. Ebenfalls möglich ist ein Nachjustieren der Drehstellung der Mutter nach dem Einsetzen den Sicherungsbolzen und bevor diese endgültig fest angezogen werden.

In einer Ausgestaltung weist die Buchsenbaugruppe eine Spannbuchse auf. Spannbuchsen, die gelegentlich auch als Spannsätze bezeichnet werden, zeichnen sich durch die Möglichkeit aus, ihren Außendurchmesser zu vergrößern und/oder ihren Innendurchmesser zu verkleinern, sodass sie mit einem durch die Spannbuchse hindurchgeführten Element und/oder mit einer Öffnung, in die die Spannbuchse eingesetzt ist, verspannt werden können. Spannbuchsen werden häufig für Welle-Nabe-Verbindungen eingesetzt. Spannbuchsen können einen Außenring und einen Innenring aufweisen, die an konisch ausgebildeten Flächen zusammenwirken. Mittels Spannschrauben können Innen- und Außenring miteinander verspannt werden, wodurch es zu der beschriebenen Vergrößerung bzw. Verkleinerung der jeweiligen Durchmesser kommt. Alternativ können zwischen Innen- und Außenring weitere Elemente angeordnet sein, die konische Flächen aufweisen und bei der Verspannung derart mit Innen- und Außenring zusammenwirken, dass es zu der beschriebenen Durchmesseränderung kommt. Bei der Erfindung sorgt die Spannbuchse für eine kraftschlüssige Verbindung zwischen der Buchsenbaugruppe und der Öffnung in dem Abschnitt des Holmelements. Durch die Verstellbarkeit der Spannbuchse kann eine Vorspannung, mit der die Buchsenbaugruppe in der Öffnung sitzt, eingestellt werden. Zudem können bis zu einem gewissen Maß Fertigungstoleranzen ausgeglichen werden.

In einer Ausgestaltung weist die Buchsenbaugruppe eine Flanschbuchse auf, die in die Spannbuchse eingesetzt ist, sodass die Spannbuchse zwischen der Metallplatte und einem nach außen weisenden Flansch der Flanschbuchse angeordnet ist. Dadurch kann die axiale Position der Spannbuchse einfach auf den Bereich zwischen der Metallplatte und dem nach außen weisenden Flansch der Flanschbuchse festgelegt werden. Die Flanschbuchse nimmt zudem nach innen gerichtete, beim Spannen der Spannbuchse ausgeübte Kräfte auf, sodass die beim Spannen der Spannbuchse erzeugte Vorspannung im Wesentlichen nach außen gerichtet ist und die Buchsenbaugruppe relativ zu der Öffnung vorspannt. Der ordnungsgemäße Sitz der Buchsenbaugruppe auf der Gleitbuchse kann durch eine entsprechende Passung des Innendurchmessers der Flanschbuchse erzielt werden.

In einer Ausgestaltung weist der Flansch eine Vielzahl von axialen Flanschbohrungen auf, durch die Spannschrauben der Spannbuchse hindurchgeführt sind. Durch diese Maßnahme wird beim Spannen der Spannbuchse nicht nur die gewünschte Vorspannung in Bezug auf die Öffnung in dem Abschnitt des Holmelements hergestellt, sondern zugleich wird die Spannbuchse in axialer Richtung gegen den Flansch der Flanschbuchse vorgespannt.

In einer Ausgestaltung sind die Durchgangsbohrungen, durch die die Sicherungsbolzen hindurchgeführt sind, in der Flanschbuchse angeordnet. Die axiale Verspannung der Buchsenbaugruppe mit der Metallplatte erfolgt also durch Verspannen der Flanschbuchse mit der Metallplatte. Die axiale Festlegung der Spannbuchse relativ zu der Flanschbuchse kann gesondert erfolgen, beispielsweise mithilfe der in der erläuterten Weise durch den Flansch der Flanschbuchse durchgeführten Spannschrauben.

In einer Ausgestaltung ist in der Öffnung, in der die Buchsenbaugruppe angeordnet ist, eine Abschnittssicherung angeordnet, die einen zylindrischen Mantelabschnitt, der zwischen dieser Öffnung und der Buchsenbaugruppe angeordnet ist, und einen nach außen weisenden Kragen, der an einer der Metallplatte gegenüberliegenden Außenfläche des Abschnitts angeordnet ist, aufweist. Durch diese Abschnittssicherung wird die axiale Position des Abschnitts mit der Öffnung relativ zu der Metallplatte zusätzlich fixiert. Insbesondere kann der Kragen eine Delamination am Rand der Öffnung verhindern. Hierzu kann der Kragen entweder unmittelbar an dem Laminat anliegen oder ein zwischen dem Kragen und dem Laminat befindlicher Spalt kann gefüllt werden, zum Beispiel mit Klebstoff. Die Abschnittssicherung kann insbesondere topfförmig ausgebildet sein und zusätzlich zu dem Mantelabschnitt und dem Kragen einen Boden aufweisen, der zwischen der Buchsenbaugruppe und der Metallplatte angeordnet ist. Zusätzlich kann die Abschnittssicherung geschlitzt sein. In diesem Fall wird die axiale Lage der Abschnittssicherung relativ zu der Metallplatte und dem Abschnitt mit der Öffnung beim Verspannen der Buchsenbaugruppe mit der Metallplatte zusätzlich fixiert.

In einer Ausgestaltung weist die Buchsenbaugruppe eine Passungsbuchse auf, die unter Vorspannung in die Öffnung eingepasst ist. Diese Lösung kann unabhängig von der Metallplatte und der Verspannung der Buchsenbaugruppe mit der Metallplatte eingesetzt und wahlweise mit den Merkmalen aller übrigen Unteransprüche kombiniert werden. Somit besteht eine besonders vorteilhafte Lösung in der folgenden Merkmalskombination:
Windenergieanlagenrotorblatt, das in Längsabschnitte teilbar ist, wobei zwei Längsabschnitte jeweils ein in Längsrichtung des Windenergieanlagenrotorblatts verlaufendes Holmelement aus einem faserverstärkten Kunststoffmaterial aufweisen, wobei in einander überlappenden Abschnitten der beiden Holmelemente jeweils eine Öffnung ausgebildet ist, in der jeweils eine Gleitbuchse angeordnet ist, wobei die beiden Gleitbuchsen mit einem durch die beiden Gleitbuchsen hindurchgeführten Bolzen miteinander verspannt sind und wobei eine Buchsenbaugruppe zwischen einer der Gleitbuchsen und der diese Gleitbuchse umgebenden Öffnung angeordnet ist, um in Radialrichtung wirkende Kräfte zwischen diesen Elementen zu übertragen, wobei die Buchsenbaugruppe eine Passungsbuchse aufweist, die unter Vorspannung in die Öffnung eingepasst ist.

In dieser Ausgestaltung kann die Buchsenbaugruppe im Wesentlichen aus der Passungsbuchse bestehen. Durch das Einpassen der Passungsbuchse unter Vorspannung in die Öffnung kann eine optimale Kraftübertragung zwischen Buchsenbaugruppe und Öffnung erzielt werden. Diese Lösung zeichnet sich gegenüber der zuvor beschriebenen, bei der die Buchsenbaugruppe eine Spannbuchse aufweist, insbesondere durch eine einfachere Montage aus. Die Montage einer Spannbuchse im Feld ist nämlich mit erheblichem Aufwand verbunden, denn es müssen beispielsweise ungefähr 20 Spannschrauben mit einem Drehmomentschlüssel sternförmig angezogen werden, um die radiale Ausdehnung der Spannbuchse einzustellen. Außerdem kann die hohe Belastung der Verbindung während einer zyklischen Beanspruchung zu einem Versagen eines äußeren Rings der Spannbuchse führen. Zudem kann bei Verwendung einer Spannbuchse die Öffnung, in die die Spannbuchse eingesetzt ist, dadurch zusätzlichen Belastungen ausgesetzt sein, dass die radiale und axiale Ausdehnung der Spannbuchse beim Spannen nicht gleichförmig erfolgt. Ein besonderer Vorteil der Passungsbuchse besteht zudem im Vergleich zu den eingangs angesprochenen, aus dem Stand der Technik bekannten und in die Öffnung eingeklebten Buchsenbaugruppen darin, dass eine solche Verklebung im Rahmen einer zyklischen Beanspruchung versagen kann. Dabei entstehende Kleberrückstände führen unter fortgesetzter Belastung häufig zu Folgeschäden an der Öffnung des faserverstärkten Rohstoffmaterials.

Das Einpassen der Passungsbuchse unter Vorspannung in die Öffnung kann auf unterschiedliche Weise erfolgen. Insbesondere kann die Passungsbuchse mit Übermaß gefertigt und unter Verwendung eines Einpresswerkzeugs in die Öffnung eingepresst werden. Hierzu kann die Passungsbuchse insbesondere mit einer Fase am äußeren Umfang versehen oder leicht konisch ausgebildet sein. Ebenfalls möglich ist es, die Passungsbuchse vor dem Einsetzen in die Öffnung stark abzukühlen. Erwärmt sich die Passungsbuchse nach dem Einsetzen in die Öffnung wieder, führt die thermische Ausdehnung der Passungsbuchse zu der gewünschten Vorspannung. In beiden Fällen führt die radiale Vorspannung zu einer höheren Belastbarkeit der Verbindung, insbesondere wird ein bei Lochleibungsbelastung zu erwartendes Klaffen zu höheren Lasten hin verschoben.

In einer Ausgestaltung sind die Durchgangsbohrungen, durch die die Sicherungsbolzen hindurchgeführt sind, in der Passungsbuchse angeordnet. In diesem Fall kann das bei der Erfindung vorgesehene Verspannen der Buchsenbaugruppe mit der Metallplatte mit den durch die Durchgangsbohrungen in der Passungsbuchse hindurchgeführten Sicherungsbolzen erfolgen.

In einer Ausgestaltung weist die Passungsbuchse ein Außengewinde auf, auf das eine Mutter aufgeschraubt ist, sodass das faserverstärkte Kunststoffmaterial des Abschnitts, in dessen Öffnung die Buchsenbaugruppe angeordnet ist, zwischen der Mutter und der Metallplatte angeordnet ist. Auch diese Mutter kann insbesondere eine Nutmutter sein. Wahlweise kann zwischen der Mutter und dem faserverstärkten Kunststoffmaterial des Abschnitts eine Unterlegscheibe angeordnet sein. Durch das Aufschrauben der Mutter auf die Passungsbuchse kann das faserverstärkte Kunststoffmaterial im Bereich der Öffnung zwischen Metallplatte und Mutter eingespannt werden, wodurch einer Delamination entgegengewirkt werden kann.

Nachfolgend wird die Erfindung anhand von Figuren näher erläutert. Alle Figuren zeigen vereinfachte, schematische Darstellungen. Es zeigen:
- Fig.1: eine Ansicht eines Windenergieanlagenrotorblatts mit Blickrichtung auf die Saugseite,
- Fig. 2: eine Schnittdarstellung des Windenergieanlagenrotorblatts aus Fig. 1 entlang der mit A-A bezeichneten Ebene,
- Fig. 3: einen Teil des Windenergieanlagenrotorblatts aus Fig. 1 in einer teilweise geschnittenen Darstellung mit Blickrichtung auf die Profilnasenkante,
- Fig. 4: eine perspektivische Ansicht zweier überlappender Holmelemente mit einer Buchsenbaugruppe, die eine Spannbuchse aufweist,
- Figur 5: eine Draufsicht auf die Anordnung aus Figur 4,
- Figur 6: einen Querschnitt durch die Anordnung aus Figur 5 entlang der mit A-A bezeichneten Schnittebene,
- Figur 7: eine Vergrößerung des mit A bezeichneten Ausschnitts der Figur 6,
- Figur 8: eine Querschnittsansicht der Anordnung aus Figur 5 entlang der mit B-B bezeichneten Ebene,
- Figur 9: eine Ausschnittsvergrößerung des in Figur 8 mit B bezeichneten Bereichs,
- Figur 10: zwei einander überlappende Holmelemente mit einer Buchsenbaugruppe, die eine Passungsbuchse aufweist, in einer Querschnittsansicht,
- Figur 11: eine Draufsicht auf die Anordnung aus Figur 10.

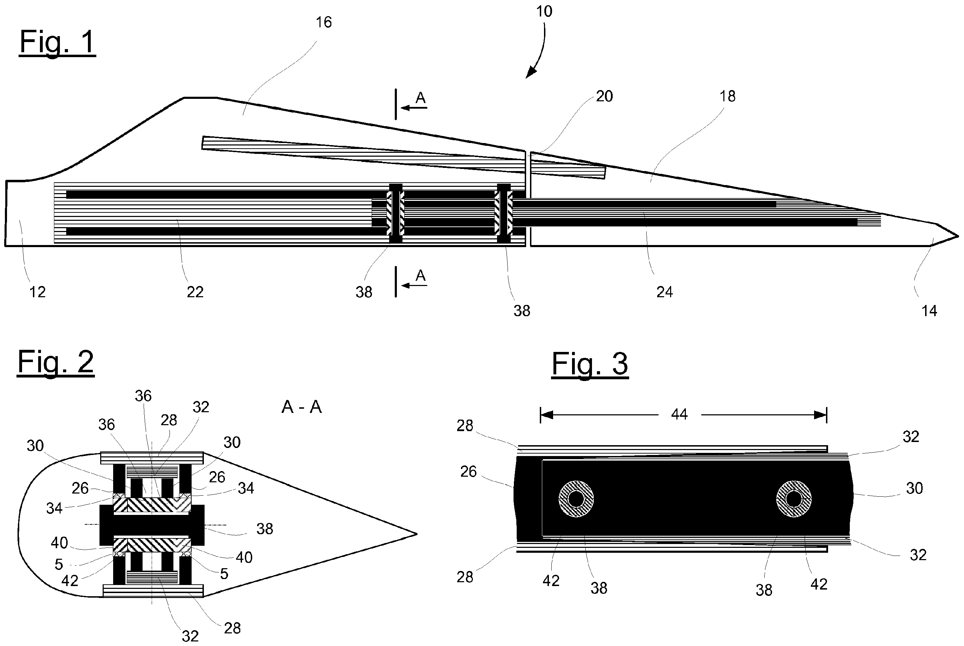

Zunächst wird der Grundaufbau eines erfindungsgemäßen, geteilten Windenergieanlagenrotorblatts 10 anhand der Figuren 1 bis 3 erläutert. Das Windenergieanlagenrotorblatt 10 hat eine Blattwurzel 12 und eine Blattspitze 14. Es ist in einen ersten Längsabschnitt 16, der die Blattwurzel 12 umfasst, und einen zweiten Längsabschnitt 18, der die Blattspitze 14 umfasst, geteilt. Die beiden Längsabschnitte 16, 18 stoßen in einer Teilungsebene 20 aneinander. Die Teilungsebene 20 verläuft durch eine aerodynamische Hülle des Windenergieanlagenrotorblatts 10 in einer Profilebene.

Ein Holmelement 22 des ersten Längsabschnitts 16 verläuft in Längsrichtung des Windenergieanlagenrotorblatts 10 und endet an der Teilungsebene 20. Ein Holmelement 24 des zweiten Längsabschnitts 18 verläuft ebenfalls in Längsrichtung des Windenergieanlagenrotorblatts 10. Es steht aus der Teilungsebene 20 hervor und erstreckt sich in das Holmelement 22 des ersten Längsabschnitts 16 hinein.

Das Holmelement 22 des ersten Längsabschnitts 16 weist zwei Stege 26 und zwei Gurte 28 auf, die einen Holmkasten bilden. Die Anordnung dieser Stege und Gurte ist am besten in der Figur 2 erkennbar. Das Holmelement 24 des zweiten Längsabschnitts 18 weist ebenfalls zwei Stege 30 und zwei Gurte 32 auf, die einen Holmkasten mit kleineren Abmessungen bilden. Der aus der Teilungsebene 20 hervorstehende Abschnitt dieses Holmelements 24 ist innerhalb des von den Stegen 26 und Gurten 28 des Holmelements 22 gebildeten Holmkastens angeordnet. Mindestens jeweils ein Steg 26 des Holmelements 22 des ersten Längsabschnitts 16 und ein Steg 30 des Holmelements 24 des zweiten Längsabschnitts 18 sind dabei parallel und in einem Abstand voneinander angeordnet.

Einander überlappende Abschnitte der Holmelemente 22, 24 bzw. der von diesen Holmelementen umfassten Stege 26 bzw. 30 weisen jeweils eine Öffnung 34 bzw. 36 auf, durch die ein Bolzen 38 hindurchgeführt ist. Der Bolzen 38 weist eine nicht im Einzelnen dargestellte Mutter auf und verspannt drei Gleitbuchsen 40, 42 miteinander, die in die Öffnungen 34 bzw. 36 eingesetzt sind. Die Gleitbuchsen 40 sind jeweils in einer der Öffnungen 34 angeordnet und weisen eine Länge auf, die etwas größer ist als die Materialstärke der Stege 26. Die Gleitbuchse 42 weist eine größere Länge auf und verläuft durch die beiden Öffnungen 36 in den Stegen 30 hindurch.

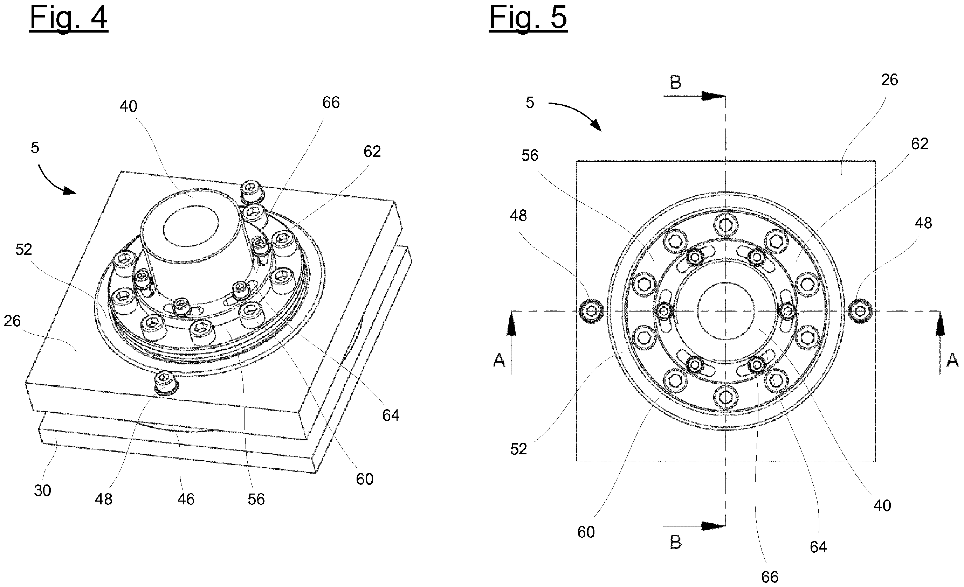

In der Ansicht der Figur 3 erkennt man besonders gut die einander überlappenden Abschnitte der Holmelemente 22 und 24, die von den Stegen 26 bzw. 30 gebildet sind. Man erkennt, dass die einander überlappenden Abschnitte eine Länge 44 aufweisen, die beispielsweise im Bereich von 1 m bis 10 m liegen kann. An jedem Ende des überlappenden Abschnitts 44 ist ein Bolzen 38 eingesetzt, wie anhand der Figur 2 erläutert. Die Figuren 1 bis 3 zeigen die bei der Erfindung verwendeten Buchsenbaugruppen nicht. Ihre Anordnung wird anhand der Detaildarstellungen der Figuren 4 bis 11 erläutert.

In der perspektivischen Ansicht der Figur 4 erkennt man zwei einander überlappend angeordnete Abschnitte der beiden Holmelemente 22, 24. Von beiden ist jeweils nur ein quadratischer Ausschnitt dargestellt. Der Abschnitt des Holmelements 22 des ersten Längsabschnitts 16 wird von dem Steg 26, also dem wurzelseitigen Steg gebildet. Der Abschnitt des Holmelements 24 des zweiten Längsabschnitts wird von dem Steg 30, also von dem spitzenseitigen Steg, gebildet.

In den in der Figur 4 nicht erkennbaren Öffnungen 34, 36 dieser Abschnitte sind die Gleitbuchsen 40, 42 angeordnet, wobei nur die in der Öffnung 34 des Stegs 26 angeordnete Gleitbuchse 40 in der Figur 4 sichtbar ist. Unterhalb des Abschnitts 26 befindet sich eine in Figur 4 fast vollständig verdeckte Metallplatte 46, die kreisförmig ist und mit zwei Gewindeschrauben 48 an dem Abschnitt des Stegs 26 befestigt ist.

Zwischen der Gleitbuchse 40 und der Öffnung 34 in dem Abschnitt des Stegs 26 ist eine Buchsenbaugruppe 5 angeordnet, die die Gleitbuchse 40 insgesamt ringförmig umschließt und die die folgenden Elemente aufweist: eine Abschnittssicherung 50, von der in Figur 4 nur ein Kragen 52 sichtbar ist, eine Flanschbuchse 54, von der in Figur 4 nur ein nach außen weisender Flansch 56 sichtbar ist, eine in Figur 4 fast vollständig verdeckte Spannbuchse 58 mit einer Vielzahl von Spannschrauben 60 sowie eine Mutter 62, die als Nutmutter ausgebildet ist und die eine Vielzahl von Durchgangsbohrungen in Form von kreisbogenförmigen Langlöchern 64 aufweist, durch die jeweils ein Sicherungsbolzen 66 hindurchgeführt ist.

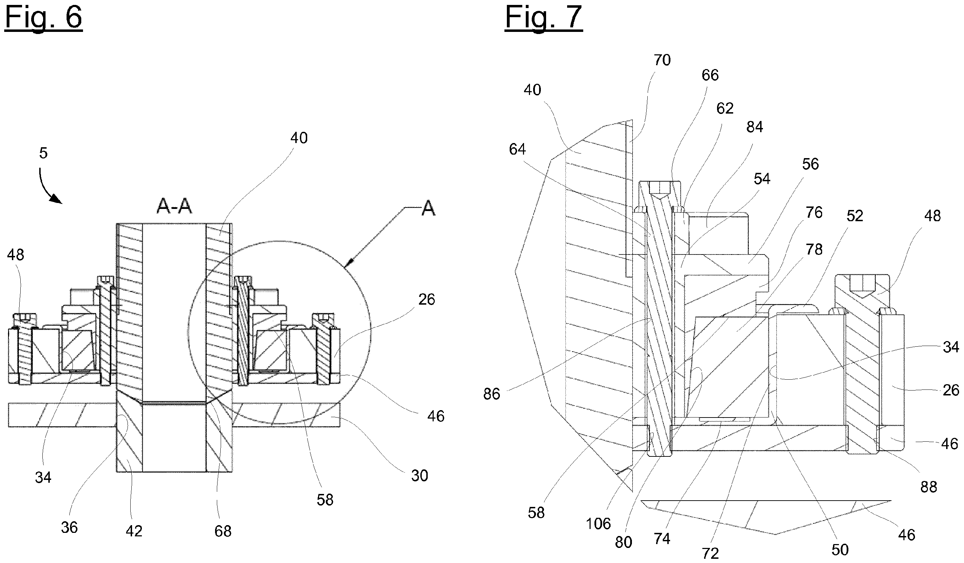

Figur 5 zeigt einen Großteil der zur Figur 4 erläuterten Elemente in einer Draufsicht. Diese sind mit denselben Bezugszeichen versehen. Im Übrigen dient Figur 5 im Wesentlichen der Erläuterung der Schnittebenen A-A und B-B. Anhand der zugehörigen Schnittdarstellungen, die den Figuren 6 bis 9 gezeigt sind, werden weitere Einzelheiten erörtert.

Figur 6 zeigt, dass die Gleitbuchse 40 und die Gleitbuchse 42, von der in Figur 6 nur ein Teil dargestellt ist, über konische Kontaktflächen 68 zusammenwirken. Werden die Gleitbuchsen 40, 42 wie vorgesehen über einen durch sie hindurchgeführten Bolzen 38, der in den Figuren 4 bis 11 nicht dargestellt ist, miteinander verspannt, wird dadurch eine exakte radiale Ausrichtung erreicht.

In der Figur 7 ist besonders gut erkennbar, dass der Abschnitt des Stegs 26 mit der Metallplatte 46 durch die Gewindeschrauben 48 verbunden ist. Ebenfalls erkennbar ist ein Außengewinde 70 der Gleitbuchse 40, auf das die Mutter 62 aufgeschraubt ist. Die Mutter 62 ist so weit auf dieses Außengewinde 70 aufgeschraubt, dass sie an einer Stirnseite der Flanschbuchse 54, an der der Flansch 56 ausgebildet ist, anliegt. Die Mutter 62 weist mehrere bogenförmige Langlöcher 64 auf.

Ebenfalls im Querschnitt der Figur 7 gut erkennbar ist die Abschnittssicherung 50, die als ein Element der Buchsenbaugruppe in die Öffnung 34 im Abschnitt des Stegs 26 eingesetzt ist. Sie weist neben dem bereits angesprochenen Kragen 52 einen zylindrischen Mantelabschnitt 72 und einen Boden 74 auf, sodass sie insgesamt topfförmig ausgebildet ist. Zwischen dem zylindrischen Mantelabschnitt 72 und der Außenseite der Flanschbuchse 54 befindet sich die Spannbuchse 58, die einen Innenring 76 und einen Außenring 78 aufweist, welche über konische Kontaktflächen 80 zusammenwirken. Von den Spannschrauben 60 ist in Figur 7 lediglich ein hinter der Schnittebene angeordneter Kopf 84 sichtbar.

Die axiale Lage der gesamten Buchsenbaugruppe ist über Sicherungsbolzen 66 fixiert, die jeweils durch eines der bogenförmigen Langlöcher 64 der Mutter 62, durch eine Durchgangsbohrung 86 in der Flanschbuchse 54 und durch eine Durchgangsbohrung im Boden 74 der Abschnittssicherung 50 hindurchgeführt und in eine Gewindebohrung 106 in der Metallplatte 46 eingeschraubt sind.

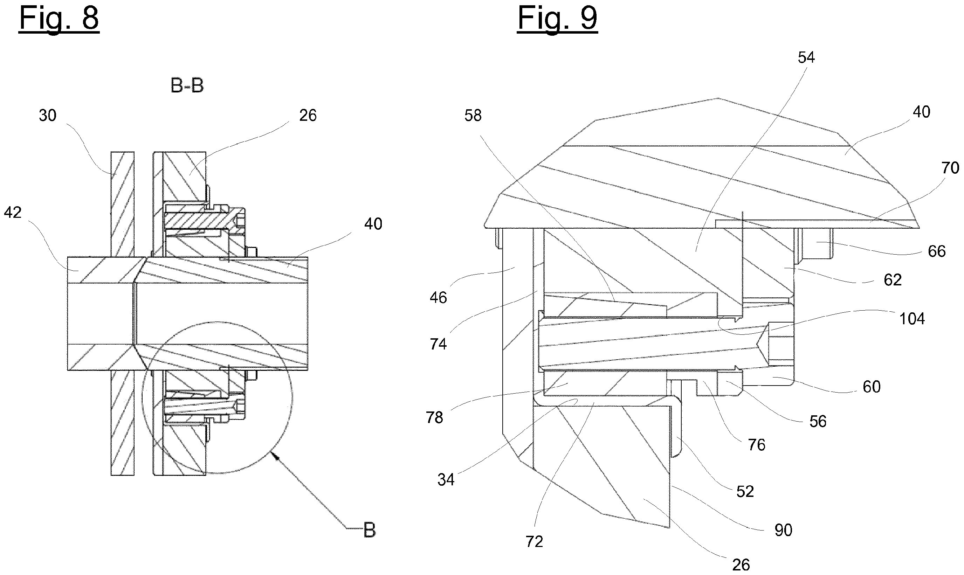

In der in Figur 8 im Überblick und in Figur 9 in einer Detailvergrößerung dargestellten Schnittebene B-B ist insbesondere die Wirkungsweise der Spannbuchse 58 besser erkennbar. Man erkennt in Figur 9, dass die Spannschrauben 60 jeweils durch eine Flanschbohrung 104 im Flansch 56 der Flanschbuchse 54 und durch eine Durchgangsbohrung im Innenring 76 der Spannbuchse 58 hindurchgeführt und in eine Gewindebohrung im Außenring 78 der Spannbuchse 58 eingeschraubt sind. Nach innen stützt sich die Spannbuchse 58 an der Flanschbuchse 54 ab. Das Spannen mit den Spannschrauben 60 bewirkt daher im Wesentlichen eine Vergrößerung des Außendurchmessers der Spannbuchse 58, wodurch die Buchsenbaugruppe einschließlich des zylindrischen Mantelabschnitts 72 der Abschnittsicherung 50 gegen die Öffnung 34 verspannt wird. Zwischen dem Kragen 52 der Abschnittssicherung 50 und der der Metallplatte 46 gegenüberliegenden Außenfläche 90 des Abschnitts des Stegs 26 befindet sich ein Spalt, der bevorzugt mit Klebstoff ausgefüllt ist, um einer Delamination des faserverstärkten Kunststoffmaterials des Abschnitts des Stegs 26 im Bereich der Öffnung 34 vorzubeugen.

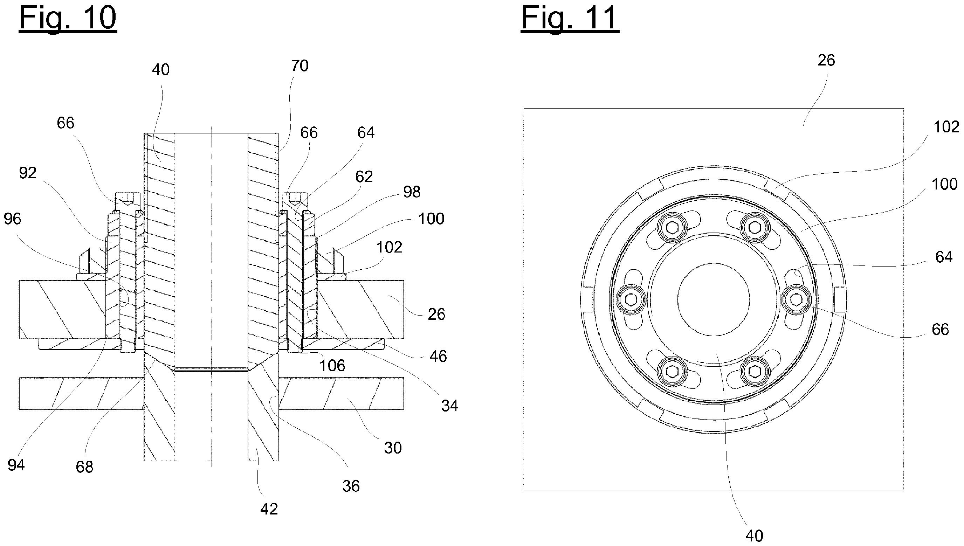

Die Figuren 10 und 11 zeigen ein anderes Ausführungsbeispiel, bei dem die Buchsenbaugruppe im Wesentlichen aus einer Passungsbuchse 92 besteht. Die Anordnung der Abschnitte der Stege 26, 30 sowie der Gleitbuchsen 40, 42 unterscheidet sich von denjenigen aus dem ersten Ausführungsbeispiel nicht. Insbesondere ist auch in diesem Ausführungsbeispiel die Gleitbuchse 42 unmittelbar in die Öffnung 36 im Abschnitt des Stegs 30 eingesetzt.

Die Passungsbuchse 92 weist im Vergleich zu der Öffnung 34 im Abschnitt des Stegs 26 ein gewisses Übermaß auf, sodass sie unter Vorspannung in die Öffnung 34 eingesetzt ist. Um die Passungsbuchse 92 in die Öffnung 34 einsetzen zu können, ohne die Öffnung 34 zu beschädigen, weist die Passungsbuchse 92 an ihrem äußeren Umfang eine kleine Fase 94 auf. Darum kann sie mit einem geeigneten Werkzeug in die Öffnung 34 eingepresst werden.

Die Passungsbuchse 92 weist eine Vielzahl von Durchgangsbohrungen 96 auf. Die auf das Außengewinde 70 der Gleitbuchse 40 aufgeschraubte Mutter 62 weist wie im ersten Ausführungsbeispiel auch bogenförmige Langlöcher 64 auf. Die Sicherungsbolzen 66 sind durch die bogenförmigen Langlöcher 64 und die Durchgangsbohrungen 96 in der Passungsbuchse 92 hindurchgeführt und in Gewindebohrungen 106 in der Metallplatte 46 eingeschraubt. Dadurch ist die Gleitbuchse 40 über die Mutter 62 mit der Passungsbuchse 92 und der Metallplatte 46 in Axialrichtung verspannt.

Weiterhin weist die Passungsbuchse 92 ein Außengewinde 98 auf, auf das eine Mutter 100 aufgeschraubt ist. Unterhalb der Mutter 100 befindet sich eine Unterlegscheibe 102, mit der ein Randbereich der Öffnung 34 gegen die Metallplatte 46 gespannt ist.

In der Figur 11, die die Anordnung der Figur 10 in einer Draufsicht zeigt, sind insbesondere die Mutter 62 mit den kreisbogenförmigen Langlöchern 64 und den Sicherungsbolzen 66 gut erkennbar, ebenso die als Nutmutter ausgeführte Mutter 100 und die darunter geordnete Unterlegscheibe 102.

### Liste der verwendeten Bezugszeichen:

- 5: Buchsenbaugruppe
- 10: Windenergieanlagenrotorblatt
- 12: Blattwurzel
- 14: Blattspitze
- 16: erster Längsabschnitt
- 18: zweiter Längsabschnitt
- 20: Teilungsebene
- 22: Holmelement des ersten Längsabschnitts
- 24: Holmelement des zweiten Längsabschnitts
- 26: Stege des Holmelements des ersten Längsabschnitts
- 28: Gurte des Holmelements des ersten Längsabschnitts
- 30: Stege des Holmelements des zweiten Längsabschnitts
- 32: Gurte des Holmelements des zweiten Längsabschnitts
- 34: Öffnungen der Stege 26
- 36: Öffnungen der Stege 30
- 38: Bolzen
- 40: Gleitbuchse des ersten Längsabschnitts
- 42: Gleitbuchse des zweiten Längsabschnitts
- 44: Länge der überlappenden Abschnitte
- 46: Metallplatte
- 48: Gewindeschraube
- 50: Abschnittssicherung
- 52: Kragen der Abschnittssicherung 50
- 54: Flanschbuchse
- 56: Flansch der Flanschbuchse 54
- 58: Spannbuchse
- 60: Spannschrauben
- 62: Mutter
- 64: kreisbogenförmiges Langloch in der Mutter 62
- 66: Sicherungsbolzen
- 68: konische Kontaktfläche der Gleitbuchsen 40/42
- 70: Außengewinde
- 72: zylindrischer Mantelabschnitt der Abschnittssicherung 50
- 74: Boden der Abschnittssicherung 50
- 76: Innenring
- 78: Außenring
- 80: Kontaktfläche zwischen Innen- und Außenring
- 84: Kopf Spannschraube 60
- 86: Durchgangsbohrung in Flanschbuchse 54
- 88: Gewindebohrung in Metallplatte 46
- 90: Außenfläche Abschnitt des Stegs 26
- 92: Passungsbuchse
- 94: Fase der Passungsbuchse
- 96: Durchgangsbohrung in der Passungsbuchse
- 98: Außengewinde
- 100: Mutter
- 102: Unterlegscheibe
- 104: Flanschbohrung
- 106: Gewindebohrung in Metallplatte 46

## Patentansprüche

1. Windenergieanlagenrotorblatt (10), das in Längsabschnitte (16, 18) teilbar ist, wobei zwei Längsabschnitte (16, 18) jeweils ein in Längsrichtung des Windenergieanlagenrotorblatts (10) verlaufendes Holmelement (22, 24) aus einem faserverstärkten Kunststoffmaterial aufweisen, wobei in einander überlappenden Abschnitten der beiden Holmelemente (22, 24) jeweils eine Öffnung (34, 36) ausgebildet ist, in der jeweils eine Gleitbuchse (40, 42) angeordnet ist, wobei die beiden Gleitbuchsen (40, 42) mit einem durch die beiden Gleitbuchsen (40, 42) hindurchgeführten Bolzen (38) miteinander verspannt sind und wobei eine Buchsenbaugruppe (5) zwischen einer der Gleitbuchsen (40) und der diese Gleitbuchse (40) umgebenden Öffnung (34) angeordnet ist, um in Radialrichtung wirkende Kräfte zwischen diesen Elementen zu übertragen, **dadurch gekennzeichnet, dass** an dem Abschnitt des Holmelements (22, 24), in dessen Öffnung (34) die Buchsenbaugruppe angeordnet ist, eine Metallplatte (46) befestigt ist, und dass die Buchsenbaugruppe in Axialrichtung mit der Metallplatte (46) verspannt ist.

2. Windenergieanlagenrotorblatt (10) nach Anspruch 1, **dadurch gekennzeichnet, dass** die Gleitbuchse (40), an der die Buchsenbaugruppe (5) angeordnet ist, ein Außengewinde (70) aufweist, auf das eine Mutter (62) aufgeschraubt ist, wobei die Buchsenbaugruppe zwischen der Mutter (62) und der Metallplatte (46) angeordnet ist und mit der Mutter (62) in Axialrichtung verspannt ist.

3. Windenergieanlagenrotorblatt (10) nach Anspruch 2, **dadurch gekennzeichnet, dass** die Buchsenbaugruppe (5) eine Vielzahl von Durchgangsbohrungen (86, 96) in Axialrichtung aufweist, durch die jeweils ein Sicherungsbolzen (66) hindurchgeführt ist, der die Buchsenbaugruppe in Axialrichtung mit der Mutter (62) und mit der Metallplatte (46) verspannt.

4. Windenergieanlagenrotorblatt (10) nach Anspruch 3, **dadurch gekennzeichnet, dass** die Metallplatte (46) Gewindebohrungen (106) aufweist, in die die Sicherungsbolzen (66) eingeschraubt sind.

5. Windenergieanlagenrotorblatt (10) nach Anspruch 3 oder 4, **dadurch gekennzeichnet, dass** die Mutter (62) Durchgangsöffnungen aufweist, durch die die Sicherungsbolzen (66) hindurchgeführt sind.

6. Windenergieanlagenrotorblatt (10) nach Anspruch 5, **dadurch gekennzeichnet, dass** die Durchgangsbohrungen in der Mutter (62) kreisbogenförmige Langlöcher (64) sind.

7. Windenergieanlagenrotorblatt (10) nach einem der Ansprüche 1 bis 6, **dadurch gekennzeichnet, dass** die Buchsenbaugruppe eine Spannbuchse (58) aufweist.

8. Windenergieanlagenrotorblatt (10) nach Anspruch 7, **dadurch gekennzeichnet, dass** die Buchsenbaugruppe eine Flanschbuchse (54) aufweist, die in die Spannbuchse (58) eingesetzt ist, so dass die Spannbuchse (58) zwischen der Metallplatte (46) und einem nach außen weisenden Flansch (56) der Flanschbuchse (54) angeordnet ist.

9. Windenergieanlagenrotorblatt (10) nach Anspruch 8, **dadurch gekennzeichnet, dass** der Flansch (56) eine Vielzahl von axialen Flanschbohrungen (104) aufweist, durch die Spannschrauben (60) der Spannbuchse (58) hindurchgeführt sind.

10. Windenergieanlagenrotorblatt (10) nach Anspruch 8 oder 9, **dadurch gekennzeichnet, dass** die Durchgangsbohrungen (86), durch die die Sicherungsbolzen (66) hindurchgeführt sind, in der Flanschbuchse (54) angeordnet sind.

11. Windenergieanlagenrotorblatt (10) nach einem der Ansprüche 1 bis 10, **dadurch gekennzeichnet, dass** in der Öffnung (34), in der die Buchsenbaugruppe angeordnet ist, eine Abschnittssicherung (50) angeordnet ist, die einen zylindrischen Mantelabschnitt (72), der zwischen dieser Öffnung (34) und der Buchsenbaugruppe angeordnet ist, und einen nach außen weisenden Kragen (52), der an einer der Metallplatte (46) gegenüberliegenden Außenfläche (90) des Abschnitts angeordnet ist, aufweist.

12. Windenergieanlagenrotorblatt (10) nach einem der Ansprüche 1 bis 6, **dadurch gekennzeichnet, dass** die Buchsenbaugruppe eine Passungsbuchse (92) aufweist, die unter Vorspannung in die Öffnung (34) eingepasst ist.

13. Windenergieanlagenrotorblatt (10) nach Anspruch 12, **dadurch gekennzeichnet, dass** die Durchgangsbohrungen (96), durch die die Sicherungsbolzen (66) hindurchgeführt sind, in der Passungsbuchse (92) angeordnet sind.

14. Windenergieanlagenrotorblatt (10) nach Anspruch 12 oder 13, **dadurch gekennzeichnet, dass** die Passungsbuchse (92) ein Außengewinde (98) aufweist, auf das eine Mutter (100) aufgeschraubt ist, so dass das faserverstärkte Kunststoffmaterial des Abschnitts, in dessen Öffnung (34) die Buchsenbaugruppe angeordnet ist, zwischen der Mutter (100) und der Metallplatte (46) angeordnet ist.
